# EUROPEAN PATENT SPECIFICATION

(11) **EP 1 704 661 B1**
(45) Date of publication and mention of the grant of the patent: **30.10.2013**
(21) Application number: 03789435.9
(22) Date of filing: 30.12.2003
(51) Int. Cl.: H04J 11/00

(54) **METHOD AND SYSTEM FOR ALLOCATION OF CHANNELISATION CODES IN A CODE DIVISION MULTIPLE ACCESS SYSTEM**
VERFAHREN UND SYSTEM ZUR ZUWEISUNG VON KANALISIERKODEN IN EINEN KODEMULTIPLEXVIELFACHZUGRIFFSSYSTEM
MÉTHODE ET SYSTÈME D'ALLOCATION DES CODES DE CANALISATION DANS UN SYSTÈME D'ACCÈS MULTIPLE PAR REPARTITION DE CODES

(43) Date of publication of application: 27.09.2006
(73) Proprietor: Unwired Planet, LLC, Reno, NV 89501 (US)
(72) Inventor: BROUWER, Frank, Bastiaan, NL-7543 GA Enschede (NL)
(74) Representative: McCann, Heather Alison
(86) International application number: PCT/EP2003/014987
(87) International publication number: WO 2005/064832

(56) References cited:
- US-A1- 2003 026 235
- US-A1- 2003 081 584
- "Universal Mobile Telecommunications System (UMTS); Spreading and modulation (FDD) (3GPP TS 25.213 version 5.3.0 Release 5); ETSI TS 125 213" ETSI STANDARDS, EUROPEAN TELECOMMUNICATIONS STANDARDS INSTITUTE, SOPHIA-ANTIPO, FR, vol. 3-R1, no. V530, March 2003 (2003-03), XP014008390 ISSN: 0000-0001

## Description

### Field of the Invention

The present invention relates generally to radio communications systems, such as cellular communication systems, having mobile radios and a radio network infrastructure. More particularly, the present invention facilitates a method and system for performing allocation of channelisation codes to channels in a Code Division Multiple Access (CDMA) system having the channelisation codes organised in a primary and zero or more secondary code trees, where each of the code trees has zero or more alternative code trees, each code tree having one or more channelisation codes per spreading factor, where the channelisation codes are according to their position in the code tree denoted consecutively by a code index with a lowest to a highest value per spreading factor within each code tree, and where the system deploys any combination of channels which may operate in a first Compressed Mode (CPM) type requiring reallocation of channels to a channelisation code with a lower spreading factor, and channels according to a second CPM type, which do not require reallocation.

### Background of the invention

A method as described is for example disclosed in US patent application nr. US 2003/026235, directed to techniques to time-share a common channelisation code among multiple terminals for compressed mode transmissions.

Down link (DL) transmissions in an implementation of a CDMA system, such as in a Wideband CDMA (WCDMA) system according the current 3rd Generation Partnership Project (3GPP) standard TS 25 series, in particular TS 25.213 (Spreading and modulation (FDD)), are coded using a scrambling code and a channelization code per channel, where each connection between base station and user mobile station may comprise one or more physical channels. The purpose of the scrambling code is to have little interference between transmission in different cells, while the channelization code serves the purpose of limited interference between transmissions in one cell. Each cell is allocated a primary scrambling code and one or more (typically 15 for a WCDMA system) secondary scrambling codes. The secondary scrambling codes are used to create additional code space.

All channelization codes using the same scrambling code are organised in a code tree where two codes on a certain level are spawned from a code of a higher level (parent code), where the values of these two codes are represented as (C,C) and (C,Ĉ), wherein C is the value of the parent code and Ĉ is the complement value of the parent code. A parent code at the top of the code tree has a certain bitrate. A code spawned from its parent code has half the bitrate of its parent code. As all codes are spread along the branches of the code tree, a property called "Spreading Factor" (SF) denotes the level of spawned codes, SF 1 for the top level, next SF 2, SF 4, SF 8,.. etc.

Mutual interference between transmissions using the same scrambling code but different channelization codes is very low, while the mutual interference between transmissions using different scrambling codes, but having the same channelization codes is higher.

The physical layer transmissions in WCDMA systems are normally continuous, i.e. there are normally no gaps in the transmission. For the purpose of measuring on the same or another frequency than the current one, WCDMA has introduced Compressed Mode (CPM), as to create a gap in the transmission for deployment of measurements. These measurements are needed to e.g. to evaluate the need for- or execute inter-frequency or inter Radio Access Technology (RAT) handovers.

In CPM the transmission is limited in time, to allow for a period without transmission. However, holding the transmission, even for a short period, would decrease the average bitrate and hence interfere with the service provided to the active channels. For non time-critical data connections a temporary decrease in bitrate would be allowable, but for speech connections or connections with a guaranteed bitrate, a decrease in bitrate would not be allowed.

State of the art WCDMA systems deploy CPM with the so called "Spreading Factor divide by two" (SF/2) method as to maintain the average bitrate. The CPM SF/2 method reallocates temporarily another channelisation code from a so called "alternative" code tree, where the bitrate is doubled by allocating a code from this alternative code tree which is a predefined code with half the SF of the currently used channel, and where the new code is allocated according to a strict relation. After this reallocation, a gap in the transmission is created, thereby keeping the average bitrate on substantially the same level as before the reallocation. For each primary or secondary scrambling code, there are two alternative scrambling codes deployed for associated alternative code trees, typically denoted by "left" and "right" alternative code tree, dedicated for CPM with SF/2 method.

When deploying CPM with the SF/2 method in prior art WCDMA systems, depending on the original channelisation code, the channel reallocates a channelisation code, having half the SF of the current channelisation code, from either a left or right alternative code tree according to a simple and strict reallocation scheme.

The scrambling code that is used in the alternative code trees is a different scrambling code than the one used for the primary code tree. By doing so, the relatively simple and strict relation between the channelisation codes for a CPM user deploying the SF/2 method is not disturbed.

In cases where a decrease in average bitrate is allowed, CPM methods known as "Higher Layer Scheduling (HLS)" and "puncturing" are deployed. In these CPM methods channelisation codes are not reallocated and the effects of decrease in bitrate are handled on a higher level.

It must be realised that channelisation codes are a limited resource within a code tree. A new request for a channelization code, although preferred, may not be possible on the primary code tree. In such case it is possible to allocate a channelisation code from a secondary code tree.

According to e.g. references "Code Placement and Replacement Strategies for Wideband CDMA OVSF Code Tree Management" by Yu-Chee Tseng, Chih-Min Chao & Shih-Lin Wu, and OVSF CODES ASSIGNMENT AND REASSIGNMENT AT THE FORWARD LINK OFW-CDMA 3G SYSTEMS" by Angelos N. Rouskas and Dimitrios N. Skoutas, well-known code placement methods, like "always left", "crowded first", or "random" are applied as allocation strategies for new channels having the general objective to make the code tree as compact as possible in order to support new calls, either with less blocking or with less reallocation costs.

However these prior art solutions would in case of (partly) occupied code trees in most cases violate the strict relation between the old and new channelisation codes when reallocating channelisation codes for a CPM user, deploying the SF/2 method. Hence these known methods could either cause a complex administration of reallocation of channels in case of CPM with the SF/2 method or require more secondary code trees in order to cope with said simple and strict reallocation scheme.

One skilled in the art will recognise that replacing of channelisation codes without a simple and strict scheme could introduce the occurrance of additional delay and a possibility of a lost connection.

In state of the art solutions of WCDMA systems several scrambling codes, typically 3 to 4, can be used at the same time. However the larger the number of simultaneously used scrambling codes the larger the mutual interference, hence resulting in a decreased capacity of the WCDMA system.

### Summary of the Invention

It is an object of the present invention to provide an improved method of performing radio communication within a CDMA based system, operating with connections that use at least one CPM method which requires reallocation of channelisation codes, such as SF/2, in a manner that signal interference caused by simultaneously deployed scrambling codes is reduced.

It is a further object of the present invention to provide a radio communication system, arranged for deploying WCDMA, in accordance with the improved method of the invention.

These and other advantages are achieved by the present invention in a method of performing allocation of channelisation codes to channels in a Code Division Multiple Access (CDMA) system having the channelisation codes organised in a primary and zero or more secondary code trees, where each of the code trees has zero or more alternative code trees, each code tree having one or more channelisation codes per spreading factor, where the channelisation codes are according to their position in the code tree denoted consecutively by a code index with a lowest to a highest value per spreading factor within each code tree, and where the system deploys any combination of channels which may operate in a first Compressed Mode (CPM) type requiring temporary reallocation of channels to a channelisation code with a lower spreading factor, and channels according to a second CPM type, which do not require reallocation, and where the channel according to the first Compressed Mode type is allocated a channelisation code with a lowest code index out of a group of free channelisation codes for a certain spreading factor, and a channel according to the second Compressed Mode type is allocated a channelisation code with a highest code index out of the group of free channelisation codes for a certain spreading factor.

The method according to the present invention is based on the insight that reallocating channels during CPM, such as required for a SF/2 method, could be executed efficiently and with a reduced number of alternative code trees, if the allocation of new channelisation codes from a code tree is taking into account the type of CPM method to be deployed for the channel, when executing an allocation of a channelisation code for a channel.

During allocation of new channelisation codes, channels that deploy a CPM method which needs reallocation (such as SF/2), are allocated starting from the outer branches at one side of the primary (or secondary) code tree, and channels that deploy a CPM method which need no reallocation (such as HLS or puncturing), are allocated starting from the outer branches at the opposite half of the code tree.

When CPM has to occur, a channel that deploys a CPM method which needs reallocation, is reallocated to its parent channelisation code within an alternative code tree, which code tree is related the primary (or secondary) code tree where the original channelisation code resides. During CPM the original channelisation code is reserved and will be re-occupied by the same channel again when the CPM period has ended.

The method of the invention may be deployed within a state of the art implementation of CDMA, such as WCDMA, without adaptions to the WCDMA standards on channelisation code re-allocation during CPM with the SF/2 method.

In a further embodiment of the method, according to the invention, channels which deploy a CPM method which does not require reallocation, such as HLS or puncturing, allocate channelisation codes, associated to channelisations codes for HLS in the primary (or secondary) code tree, from an alternative code tree.

These and other embodiments according to the present invention are now illustrated in more detail with reference to the enclosed drawings.

### Brief Description of the Drawings

Fig. 1 presents a schematic diagram of a code tree of a CDMA system, as implemented by a WCDMA system, showing channelisation codes;
Fig. 2 presents a diagram of primary and secondary code trees with their respective alternative code trees;
Fig. 3 presents a diagram of a code trees according to the invention.

### Detailed Description

Without restrictions to the scope of the invention, in order to provide a thorough understanding of the present invention, the invention is presented against the background and within the scope of the current implementation of CDMA systems by e.g. a WCDMA system according to the current 3rd Generation Partnership Project (3GPP) standard TS 25 series, in particular TS 25.213. However, the present invention may be employed in any context where there is a system deploying a generic CDMA protocol.

In state of the art implementations of CDMA systems, such as WCDMA systems, the scrambling codes are Gold codes. Each cell is allocated a primary scrambling code and 15 secondary scrambling codes. The secondary scrambling codes are used to create additional code space.

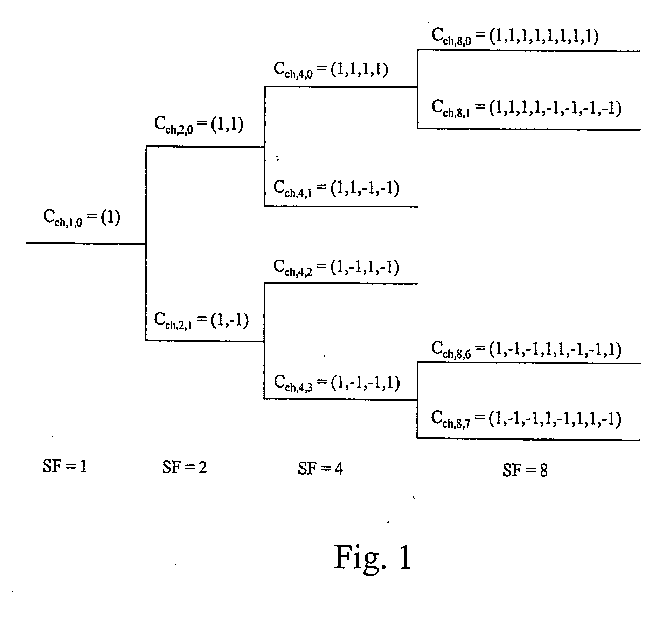

Fig. 1 illustrates schematically a code tree within a WCDMA system. The channelisation codes are Orthogonal Variable Spreading Factor (OVSF) codes. All channelisation codes using the same scrambling code are part of the same code tree. The Spreading Factor (SF) determines the rate of the channel. Each "parent" channelisation code has two "children" with a doubled SF. Any channelisation code in the code tree can only be allocated when no channelisation codes in its branch are allocated. So none of the (grand)children or (grand)parent of an allocated channelisation code may be allocated as well from the same code tree.

The root code of the code tree is denoted by C_{ch 1,0} wi th logical value (1), where this root code as well as other OVSF codes are denoted as C_{ch,SF,k,} wherein "C_{ch}" is the channelisation code with index "_{SF}" for the spreading factor (SF) and index "ₖ" for the code index (or branch nbr), where 0 ≤ k ≤ SF-1. The channelisation codes on each subsequent lower level with respect to the parent code are denoted by C_{ch SF*2,((n+1)*2)-2} and C_{ch SF*2, (n+1)*2-1,} where the code values are defi ned by spawni ng two codes values (C_{ch},C_{ch}) and (C_{ch},Ĉ_{ch}) of the parent code, where Ĉ_{ch} denotes the complement value of C_{ch}. For each lower level the Spreading Factor SF is doubled, just as the number of codes by spawning two codes from a parent code, hence the number of codes for a certain SF is equal to the SF. The parent code has the highest bit rate BR. The codes at the lower level (hence with a higher SF) have a lower bit rate, equal to BR/SF.

The mutual interference between transmissions using the same scrambling code but different channelisation codes is very low, while the mutual interference between transmissions using different scrambling codes, but having the same channelisation codes is higher.

The physical layer transmissions in WCDMA are normally continuous, i.e. there are normally no gaps in the transmission. For the purpose of e.g. measurement and execution for inter frequency and inter RAT handovers, gaps in the transmission are created as to have a transmission free period, wherein e.g. measurements on a same or other frequency/code than the current one can be made. The WCDMA implementation of CDMA has introduced the term "Compressed Mode" (CPM) for the mode wherein the system is operating when these transmission gaps are created.

During CPM the transmission is limited in time, to allow for a time without transmission. There are two main methods for deploying CPM: Spreading Factor decrease by 2 (SF/2) and Higher Layer Scheduling (HLS). A third alternative called puncturing also exists but is less used. In the scope of this invention the puncturing method is completely equal to HLS.

Summary of the known techniques for creating gaps in transmission:
i) CPM with SF/2 method steps up one level in the code tree (e.g. from SF = 128 to SF = 64). By doing so the bit rate is doubled, so only half the time is required to transmit the same amount of data.
ii) When deploying CPM with HLS method, the application data is scheduled (delayed) such that a lower peak rate results. So only a part of the time is required to transmit the data.
iii) When deploying CPM with puncturing method, physical layer information is punctured, decreasing the coding rate, i.e. the protection is decreased.

When deploying CPM with SF/2 method a channelisation code with a higher bit rate than currently used needs to be allocated. There is a strict relation, according to the WCDMA standard, between the currently allocated channelisation code and the channelisation code that shall be used during CPM. The new channelisation code is a parent of the current channelisation code in an alternative code tree using an alternative scrambling code, where no other channelisation codes may be allocated from the sub code tree under this parent.

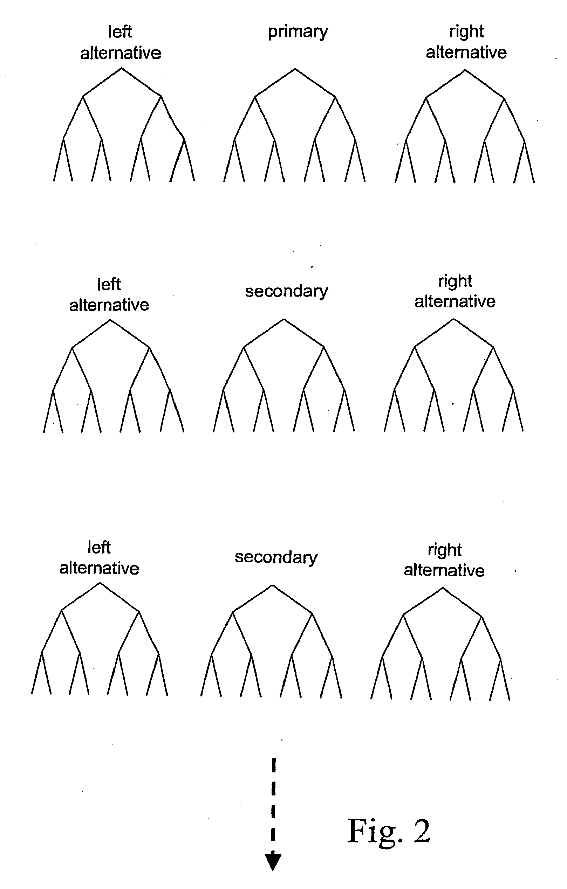

Fig. 2 illustrates schematically primary and secondary code trees with their respective related alternative code trees within a WCDMA system.

In prior art there are two alternative scrambling codes reserved for each primary or secondary code tree for CPM with SF/2 method, denoted as a "left" alternative code tree and a "right" alternative code tree. There are two alternative code trees reserved for CPM with SF/2 method at each primary or secondary code tree, where a strict relation between the original and reallocated channelisation codes must be maintained, resulting in a allocation within either the left or right alternative code tree, dependent on the original channelisation code at the primary or secondary code tree.

The strict relation, referred to in the preceding description, is presented here where channelisation codes are denoted as C_{ch,SF,k,} 0 ≤ k ≤ SF-1. During CPM deploying the SF/2 method, the reallocated channel has a channelisation code C_{ch,SF/2,k} on the left alternative code tree if original k < SF/2. During CPM deploying the SF/2 method, the reallocated channel has a channelisation code C_{ch,SF/2,k-SF/2} on the right alternative code tree if original k ≥ SF/2.

From the state of the art scheme presented above it is clear that for CPM with the SF/2 method, channelisation codes are reallocated to either the left or right alternative code trees, depending on its original location at the primary or secondary code tree.

Channelisation codes are a limited resource. A new request for a channelisation code may not be possible on the primary code tree. In such case it is possible to allocate codes from a secondary code tree with a scrambling code different from the primary code tree scrambling code.

In the state of the art solutions of CDMA systems such as WCDMA systems several scrambling codes, typically 3 to 4, can be used at the same time. However the larger the number of used scrambling codes the larger the mutual interference. This results in a decreased capacity.

With the invention, the number of used scrambling codes is reduced without violating the simple but strict relation for reallocation of channelisation codes of channels deploying CPM with SF/2 method. Using less scrambling codes, leads to lower mutual interference and hence to an increased capacity of the WCDMA system.

As a result of the issues stated above, it is to be regarded as advantageous to use as few scrambling codes as possible.

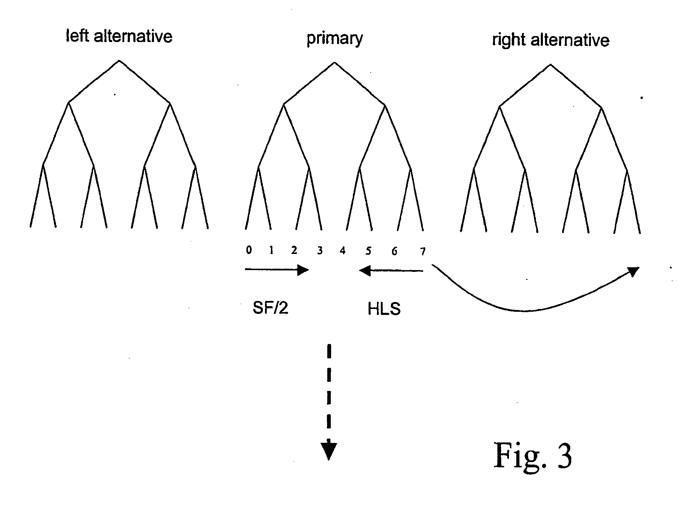

Fig. 3 illustrates schematically a set of code trees, where a primary (and one or more secondary) code tree together with its two related alternative code trees is depicted for use within a WCDMA system according to the invention. Code indexes for a SF = 8 are depicted, where the SF is arbitrary chosen for explanation of the invention.

As a solution for decreasing the mutual interference within a WCDMA system and hence increasing the capacity of the system, all channels that deploy a CPM method that requires reallocation (such as SF/2) are allocated starting from the outer branches at one side of the code tree and the channels that deploy CPM without the need for reallocation (such as HLS or puncturing) are allocated starting from the outer branches at the opposite side of the code tree.

The figure illustrates as an example, channels that deploy a CPM method that requires reallocation (such as SF/2) are allocated starting from the left side (or half) of the primary (or secondary) code tree with a lowest code index nbr 0, and channels that deploy CPM without the need for reallocation (such as HLS or puncturing) are allocated starting from the right side of the primary (or secondary) code tree with a highest code index nbr 8.

According to the invention, the method for allocating a channel is presented according to the following steps:
- determine the type of CPM of the channel which is to be allocated a channelisation code;
- when allocating a channelisation code for a channel that deploys CPM that needs reallocation (e.g. SF/2 method), select the available code with the lowest code index, hence starting from the left side of the primary (or secondary) code tree;
- when allocating a channelisation code for a channel that deploys CPM which does not need reallocation (e.g. using HLS method), select the available code with the highest code index, hence starting from the right side of the primary (or secondary) code tree.

One skilled in the art will understand that using the left-or right side, represented respectively by lowest- and highest code indexes, of the code tree will be arbitrary as long as the two distinguished CPM type channels are located starting at opposite outer branches of the code tree.

According to this method, channels deploying CPM which need reallocation (such as SF/2) will, according to the strict reallocation rules presented above, only be reallocated to the left alternative code tree as long as the original location resides in the left side of the primary (or secondary) code tree, hence only one alternative code tree for these reallocated channels is in use.

As a result of the code placement according to the invention, when there are sufficient codes available for normal traffic, in most practical cases only two code trees (a primary and its left alternative) instead of three code trees will be in use.

As a further embodiment of the invention, that further exploits the benefit of allocating less code trees, the general concept is represented by the insight that: when normal mode traffic requires a secondary code tree, allocate channels that deploy CPM without the need for reallocation (such as HLS) to channelisation codes on an alternative code tree, associated to codes that are currently in use for HLS channels in the primary (or secondary) code tree.

In case of code shortage, channels which deploy CPM without need for reallocation (such as HLS), share an alternative code tree with normal mode users, decreasing the number of code trees in use (in most practical cases from four to three, hence one primary and two alternative code trees). This further embodiment again decreases the mutual interference, and therefore increases the capacity of the system.

As CPM might be frequently deployed in cells at the edge of the CDMA network coverage, the existence of alternative code trees is regarded as frequent as well. In case of code shortage at a primary code tree, a creation of a secondary code tree, while alternative code trees with free codes exists, is to be regarded as waste of code space.

Below this further embodiment of the method is described for the cases that a new channel requires a channelisation code where this new channel deploys CPM either with a need for reallocation (such as SF/2) at paragraph A or without a need for reallocation (such as HLS) at paragraph B.

### Par. A)

A method to allocate new channels which deploy a CPM method which needs reallocation, such as SF/2, comprise the following steps:
- create a candidate list of channelisation codes in the primary (or secondary) code tree which are free and not reserved;
- a channelisation code on this list, having a corresponding parent code at the associated alternative code tree which is not free is excluded from the candidate list;
- if more than one candidate exists in the primary (or secondary) code tree, select a candidate with a lowest code index, hence from the left side of the code tree, on the primary (or secondary) code tree;
- if there exist no candidate on the primary (or secondary) code tree try to reallocate a HLS type channel from the primary (or secondary) code tree to an alternative code tree to free space on the primary (or secondary) code tree for the new channel;
- if insufficient free space can be created through reallocation of HLS type channels, the new channel is allocated a channelisation code from a new secondary code tree.

### Par. B)

A method to allocate new channels which deploy a CPM method which do not need reallocation, such as HLS, comprise the following steps:
- create a list of candidate channelisation codes in the primary (or secondary) code tree which are free and not reserved;
- if more than one candidate channelisation code exists, select the code with the highest code index from said list;
- if no candidate channelisation code at the primary (or secondary) code tree exists create a list with candidate channelisation codes at a right side alternative code tree related to the primary (or secondary) code tree, which codes must be free and not reserved, with the restriction that the same channelisation code at the related primary (or secondary) code tree must be used by a channel that uses HLS in case of CPM;
- if more than one candidate channelisation code exists, select the code with the highest code index from said list;
- if still no candidate channelisation code at the right alternative code tree exists create a list with candidate channelisation codes at a left alternative code tree related to the primary (or secondary) code tree, which codes must be free and not reserved, and the same channelisation code at the primary code tree must be used by a channel that uses HLS in case of CPM;
- if more than one candidate channelisation code exists, select the code with the highest code index from said list;
- if no candidate channelisation code at the left alternative code tree exists, the channel is allocated a channelisation code from a new secondary code tree.

The method presented above is deployed in a CDMA system, e.g. a WCDMA system as implementation of CDMA, comprising mobile user equipment, radio base stations RBS, radio base station controllers (RBC) and radio network controllers (RNC). The method presented above may be executed in the RBS, RBC or RNC, where at least one of these entities has electronic equipment such as processing units, I/O circuitry and memory, configured to select and allocate channelisation codes, create and store lists, reallocate channels, determine the CPM type of the channel and apply the signalling between the elements requesting for allocation of a channelisation code to a channel and the elements performing the allocation of a channelisation code to a channel.

By improving the system capacity as a result of less mutual interference by the reduced number of code trees, the method of the invention contributes to system benefits for the operator of such a system.

A higher number of code trees simultaneously in use will increases the output power of a base station, hence the invention provides a CDMA communication system with increased capacity, compared to prior art systems.

## Claims

1. A method for performing allocation of channelisation codes (C_{ch}) to channels in a Code Division Multiple Access (CDMA) system having the channelisation codes (C_{ch}) organised in a primary and zero or more secondary code trees, where each of the code trees has zero or more alternative code trees, each code tree having one or more channelisation codes (C_{ch}) per spreading factor (SF), where the channelisation codes (C_{ch}) are according to their position in the code tree denoted consecutively by a code index with a lowest to a highest value per spreading factor (SF) within each code tree, and where the system deploys any combination of channels which may operate in a first Compressed Mode type requiring reallocation of channels to a channelisation code with a lower spreading factor (SF), and channels according to a second Compressed Mode type, whi ch do not require reallocation, **characterised in that** the channel according to the first Compressed Mode type is allocated a channelisation code with a lowest code index out of a group of free channelisation codes (C_{ch}) for a certain spreading factor (SF), and a channel according to the second Compressed Mode type is allocated a channelisation code with a highest code index out of the group of free channelisation codes (C_{ch}) for a certain spreading factor (SF).

2. The method according to claim 1 wherein a request for allocation of a channelisation code for a channel encloses the type of Compressed Mode to be deployed.

3. The method according to claim 1, wherein the group of free channelisation codes (C_{ch}) for a certain spreading factor (SF) comprises channelisation codes (C_{ch}) from the primary code tree.

4. The method according to claim 3, wherein the group of free channelisation codes (C_{ch}) for a certain spreading factor (SF) also comprise channelisation codes (C_{ch}) from one or more secondary code trees.

5. The method according to claims 3 or 4, wherein the group of free channelisation codes (C_{ch}) for a certain spreading factor (SF) also comprise channelisation codes (C_{ch}) from one or more alternative code trees, each of the alternative code trees being related to said primary or secondary code tree.

6. The method according to claim 5, wherein selection of a channelisation code from the group of free channelisation codes (C_{ch}) for a certain spreading factor (SF) from the primary code tree has precedence over a channelisation code from each of the alternative code trees, where the alternative code tree is related to the primary code tree.

7. The method according to claims 5 or 6, wherein selection of a channelisation code from the group of free channelisation codes (C_{ch}) for a certain spreading factor (SF) from the alternative code tree, where the alternative code tree is related to the primary code tree, has precedence over a channelisation code from the secondary code tree.

8. The method according to claims 5, 6 or 7, wherein selection of a channelisation code from the group of free channelisation codes (C_{ch}) for a certain spreading factor (SF) from the secondary code tree, has precedence over a channelisation code from an alternative code tree, where the alternative code tree is related to the secondary code tree.

9. The method according to claims 3 to 8, wherein the group of free channelisation codes (C_{ch}) do not include channelisation codes (C_{ch}) that are reserved.

10. The method according to claims 1 where the reallocation of a channelisation code is an occasion limited in time duration.

11. The method according to any of the preceding claims, comprising the steps of:
- determining the type of Compressed Mode of the channel which is to be allocated a channelisation code;
- selecting a channelisation code from the group of free channelisation codes (C_{ch}) with a lowest code index, hence starting from the left side of the primary code tree for allocating a channelisation code for a channel according to the first Compressed Mode type;
- selecting a channelisation code from the group of free channelisation codes (C_{ch}) with a highest code index, hence starting from the right side of the primary code tree for allocating a channelisation code for a channel according to the second Compressed Mode type.

12. The method according to claims 1 to 10, for allocating a channelisation code to a channel according to a first Compressed Mode type comprising 'the steps of:
- creating a list of candidate channelisation codes (C_{ch}) in the primary code tree which are free and not reserved;
- excluding from the list a candidate channelisation code, having a corresponding parent code at the associated alternative code tree which is not free;
- selecting and allocating a candidate channelisation code from the list with a lowest code index, hence from the left side of the code tree, on the primary code tree, if more than one candidate channelisation code exists in the primary code tree;
- reallocating a channel according to the second Compressed Mode type from the primary code tree to an alternative code tree if there is no candidate channelisation code on the list, and allocating the freed channelisation code to the channel according to the first Compressed Mode type;
- allocating a channelisation code from a new secondary code tree if insufficient free space is created through reallocation of channels according to the second Compressed Mode type.

13. The method according to claims 1 to 10, for allocating a channelisation code to a channel according to the second Compressed Mode type comprising the steps of:
- creating a list of candidate channelisation codes (C_{ch}) in the primary or secondary code tree which are free and not reserved;
- selecting and allocating a channelisation code from the list with a highest code index, hence from the right side of the code tree, on the primary or secondary code tree, if more than one candidate exists in the primary or secondary code tree;
- creating a first alternative list, if no candidate channelisation code at the primary or secondary code tree exists, with candidate channelisation codes (C_{ch}) at a right side alternative code tree related to the primary or secondary code tree, which channelisation codes (C_{ch}) must be free and not reserved and with the restriction that the same channelisation code at the related primary or secondary code tree must be used by a channel according to the second Compressed Mode type;
- selecting and allocating the candidate channelisation code with the highest code index from said first alternative list if more than one candidate channelisation code exists;
- creating a second alternative list with candidate channelisation codes (C_{ch}) at a left alternative code tree, which alternative code is related to said primary code tree, if no candidate channelisation code at the right alternative code tree exists, which channelisation codes (C_{ch}) must be free and not reserved and the same channelisation code at the primary code tree must be used by a channel according to the second Compressed Mode type;
- selecting and allocating the candidate channelisation code with the highest code index from said second alternative list if more than one candidate channelisation code exists;
- allocating a channelisation code from a new secondary code tree if no candidate channelisation code at the left alternative code tree exists.

14. The method according to claims 11, 12 or 13, where the steps are deployed on, and related to, the primary code tree or the secondary code tree.

15. The method according to any of the preceding claims wherein the first Compressed Mode type is a Spreading factor (SF) divide by 2 (SF/2) method, and the second Compressed Mode type is a Higher level scheduling (HLS) or puncturing method.

16. The method according to any of the preceding claims wherein the CDMA system is a WCDMA system

17. A Code Division Multiple Access (CDMA) system device, comprising electronic equipment, processing units, I/O circuitry and memory, configured to select and allocate channelisation codes (C_{ch}), create and store lists with free and not reserved channelisation codes (C_{ch}), reallocate channels, determine the Compressed Mode type of the channel requesting for a channelisation code, and apply the signalling between requesting for allocation of a channelisation code to a channel and performing the allocation of a channelisation code to a channel, according to the method of claims 1, 11, 12, 13, 14 or 15, wherein the device is one of a radio base station (RBS), a radio base station controller (RBC) and a radio network controller (RNC).

18. A device according to claim 17, wherein the device operates according to a Wideband CDMA (WCDMA) standard.

19. A Code Division Multiple Access (CDMA) system comprising devices according to claim 17 and mobile user equipment, wherein the system deploys the method of claims 1, 11, 12, 13, 14 or 15.

20. A system according to claim 19, wherein the system is a system operating according to a Wideband COMA (WCDMA) standard.

## Patentansprüche

1. Verfahren zum Ausführen einer Zuordnung von Kanalaufteilungscodes (C_{ch}) zu Kanälen in einem Codemultiplex-Vielfachzugriffssystem (CDMA-System), bei dem die Kanalaufteilungscodes (C_{ch}) in einem primären Codebaum und null oder mehr sekundären Codebäumen organisiert sind, wobei jeder der Codebäume null oder mehr alternative Codebäume aufweist und jeder Codebaum gemäß Spreizfaktor (SF) einen oder mehrere Kanalaufteilungscodes (C_{ch}) aufweist, wobei die Kanalaufteilungscodes (C_{ch}) in jedem Codebaum entsprechend ihrer Position im Codebaum fortlaufend mit einem Codeindex von einem niedrigsten zu einem höchsten Wert gemäß Streufaktor (SF) bezeichnet werden und wobei das System jede Kombination von Kanälen einsetzt, die in einem ersten komprimierten Modustyp arbeiten können und eine Neuzuordnung von Kanälen zu einem Kanalaufteilungscode mit einem geringeren Spreizfaktor (SF) erfordern, und von Kanälen gemäß einem zweiten komprimierten Modustyp, die keine Neuzuordnung erfordern, **dadurch gekennzeichnet, dass** dem Kanal gemäß dem ersten komprimierten Modustyp ein Kanalaufteilungscode mit einem niedrigsten Codeindex aus einer Gruppe von freien Kanalaufteilungscodes (C_{ch}) für einen bestimmten Spreizfaktor (SF) zugeordnet wird und einem Kanal gemäß dem zweiten komprimierten Modustyp ein Kanalaufteilungscode mit einem höchsten Codeindex aus der Gruppe von freien Kanalaufteilungscodes (C_{ch}) für einen bestimmten Spreizfaktor (SF) zugeordnet wird.

2. Verfahren nach Anspruch 1, bei dem eine Anforderung für eine Zuordnung eines Kanalaufteilungscodes für einen Kanal den einzusetzenden komprimierten Modustyp umfasst.

3. Verfahren nach Anspruch 1, bei dem die Gruppe von freien Kanalaufteilungscodes (C_{ch}) für einen bestimmten Spreizfaktor (SF) Kanalaufteilungscodes (C_{ch}) des primären Codebaums umfasst.

4. Verfahren nach Anspruch 3, bei dem die Gruppe von freien Kanalaufteilungscodes (C_{ch}) für einen bestimmten Spreizfaktor (SF) auch Kanalaufteilungscodes (C_{ch}) eines oder mehrerer sekundärer Codebäume umfasst.

5. Verfahren nach Anspruch 3 oder 4, bei dem die Gruppe von freien Kanalaufteilungscodes (C_{ch}) für einen bestimmten Spreizfaktor (SF) auch Kanalaufteilungscodes (C_{ch}) eines oder mehrerer alternativer Codebäume umfasst, wobei jeder der alternativen Codebäume mit dem primären oder sekundären Codebaum in Beziehung steht.

6. Verfahren nach Anspruch 5, bei dem das Auswählen eines Kanalaufteilungscodes aus der Gruppe von freien Kanalaufteilungscodes (C_{ch}) für einen bestimmten Spreizfaktor (SF) aus dem primären Codebaum gegenüber einem Kanalaufteilungscode aus jedem der alternativen Codebäume Vorrang hat, wobei der alternative Codebaum mit dem primären Codebaum in Beziehung steht.

7. Verfahren nach Anspruch 5 oder 6, bei dem das Auswählen eines Kanalaufteilungscodes aus der Gruppe von freien Kanalaufteilungscodes (C_{ch}) für einen bestimmten Spreizfaktor (SF) aus dem alternativen Codebaum, wobei der alternative Codebaum mit dem primären Codebaum in Beziehung steht, gegenüber einem Kanalaufteilungscode aus dem sekundären Codebaum Vorrang hat.

8. Verfahren nach Anspruch 5, 6 oder 7, bei dem das Auswählen eines Kanalaufteilungscodes aus der Gruppe von freien Kanalaufteilungscodes (C_{ch}) für einen bestimmten Spreizfaktor (SF) aus dem sekundären Codebaum gegenüber einem Kanalaufteilungscode aus einem alternativen Codebaum Vorrang hat, wobei der alternative Codebaum mit dem sekundären Codebaum in Beziehung steht.

9. Verfahren nach den Ansprüchen 3 bis 8, bei dem die Gruppe von freien Kanalaufteilungscodes (C_{ch}) keine Kanalaufteilungscodes (C_{ch}) umfasst, die reserviert sind.

10. Verfahren nach Anspruch 1, bei dem die Neuzuordnung eines Kanalaufteilungscodes ein hinsichtlich der Zeitdauer beschränktes Ereignis ist.

11. Verfahren nach einem der vorhergehenden Ansprüche, das folgende Schritte umfasst:
- Bestimmen des komprimierten Modustyps des Kanals, dem ein Kanalaufteilungscode zuzuordnen ist;
- Auswählen eines Kanalaufteilungscodes aus der Gruppe von freien Kanalaufteilungscodes (C_{ch}) mit einem niedrigsten Codeindex, folglich beginnend von der linken Seite des primären Codebaums, zum Zuordnen eines Kanalaufteilungscodes für einen Kanal gemäß dem ersten komprimierten Modustyp;
- Auswählen eines Kanalaufteilungscodes aus der Gruppe von freien Kanalaufteilungscodes (C_{ch}) mit einem höchsten Codeindex, folglich beginnend von der rechten Seite des primären Codebaums, zum Zuordnen eines Kanalaufteilungscodes für einen Kanal gemäß dem zweiten komprimierten Modustyp.

12. Verfahren nach den Ansprüchen 1 bis 10, um einem Kanal gemäß einem ersten komprimierten Modustyp einen Kanalaufteilungscode zuzuordnen, wobei das Verfahren folgende Schritte umfasst:
- Erstellen einer Liste von in Frage kommenden Kanalaufteilungscodes (C_{ch}) im primären Codebaum, die frei und nicht reserviert sind;
- Ausschließen eines in Frage kommenden Kanalaufteilungscodes aus der Liste, der im zugehörigen alternativen Codebaum einen entsprechenden Stammcode hat, der nicht frei ist;
- Auswählen und Zuordnen eines in Frage kommenden Kanalaufteilungscodes aus der Liste mit einem niedrigsten Codeindex, folglich von der linken Seite des Codebaums auf dem primären Codebaum, wenn im primären Codebaum mehr als ein in Frage kommender Kanalaufteilungscode existiert;
- erneutes Zuordnen eines Kanals gemäß dem zweiten komprimierten Modustyp aus dem primären Codebaum zu einem alternativen Codebaum, wenn es keinen in Frage kommenden Kanalaufteilungscode in der Liste gibt, und Zuordnen des freigegebenen Kanalaufteilungscodes zu dem Kanal gemäß dem ersten komprimierten Modustyp;
- Zuordnen eines Kanalaufteilungscodes aus einem neuen sekundären Codebaum, wenn durch die erneute Zuordnung von Kanälen gemäß dem zweiten komprimierten Modustyp nicht ausreichend Freiraum gebildet wird.

13. Verfahren nach den Ansprüchen 1 bis 10, um einem Kanal gemäß dem zweiten komprimierten Modustyp einen Kanalaufteilungscode zuzuordnen, wobei das Verfahren folgende Schritte umfasst:
- Erstellen einer Liste von in Frage kommenden Kanalaufteilungscodes (C_{ch}) im primären oder sekundären Codebaum, die frei und nicht reserviert sind;
- Auswählen und Zuordnen eines Kanalaufteilungscodes aus der Liste mit einem höchsten Codeindex, folglich von der rechten Seite des Codebaums, auf dem primären oder sekundären Codebaum, wenn im primären oder sekundären Codebaum mehr als ein Kandidat existiert;
- Erstellen einer ersten alternativen Liste, wenn es keinen in Frage kommenden Kanalaufteilungscode im primären oder sekundären Codebaum gibt, wobei sich die in Frage kommenden Kanalaufteilungscodes (C_{ch}) in einem rechten alternativen Codebaum, der mit dem primären oder sekundären Codebaum in Beziehung steht, befinden, wobei die Kanalaufteilungscodes (C_{ch}) frei sein müssen und nicht reserviert sein dürfen, und mit der Einschränkung, dass der gleiche Kanalaufteilungscode im zughörigen primären oder sekundären Codebaum von einem Kanal gemäß dem zweiten komprimierten Modustyp verwendet werden muss;
- Auswählen und Zuordnen des in Frage kommenden Kanalaufteilungscodes mit dem höchsten Codeindex aus der ersten alternativen Liste, wenn es mehr als einen in Frage kommenden Kanalaufteilungscode gibt;
- Erstellen einer zweiten alternativen Liste mit in Frage kommenden Kanalaufteilungscodes (C_{ch}) auf einem linken alternativen Codebaum, wobei der alternative Codebaum mit dem primären Codebaum in Beziehung steht, wenn es auf dem rechten alternativen Codebaum keinen in Frage kommenden Kanalaufteilungscode gibt, wobei die Kanalaufteilungscodes (C_{ch}) frei sein müssen und nicht reserviert sein dürfen und der gleiche Kanalaufteilungscode im primären Codebaum von einem Kanal gemäß dem zweiten komprimierten Modustyp verwendet werden muss;
- Auswählen und Zuordnen des in Frage kommenden Kanalaufteilungscodes mit dem höchsten Codeindex aus der zweiten alternativen Liste, wenn es mehr als einen in Frage kommenden Kanalaufteilungscode gibt;
- Zuordnen eines Kanalaufteilungscodes aus einem neuen sekundären Codebaum, wenn es im linken alternativen Codebaum keinen in Frage kommenden Kanalaufteilungscode gibt.

14. Verfahren nach Anspruch 11, 12 oder 13, bei dem die Schritte am primären Codebaum oder am sekundären Codebaum angewendet und mit diesen in Beziehung gesetzt werden.

15. Verfahren nach einem der vorhergehenden Ansprüche, bei dem es sich bei dem ersten komprimierten Modustyp um ein Verfahren nach einem Spreizfaktor (SF) geteilt durch 2 (SF/2) und bei dem zweiten komprimierten Modustyp um ein problemorientiertes Zeitablaufsteuerungs- (HLS-) oder ein Punktierungsverfahren handelt.

16. Verfahren nach einem der vorhergehenden Ansprüche, bei dem das CDMA-System ein WCDMA-System ist.

17. Codemultiplex-Vielfachzugriff- (CDMA-) Systemvorrichtung, mit elektronischen Geräten, Verarbeitungseinheiten, einer Ein-/Ausgabe-Schaltungsanordnung und einem Speicher, die so konfiguriert sind, dass sie Kanalaufteilungscodes (C_{ch}) auswählen und zuordnen, Listen mit freien und nicht reservierten Kanalaufteilungscodes (C_{ch}) erstellen und speichern, Kanäle neu zuordnen, den komprimierten Modustyp des einen Kanalaufteilungscode anfordernden Kanals bestimmen und die Signalisierung zwischen der Anforderung für eine Zuordnung eines Kanalaufteilungscodes zu einem Kanal und das Ausführen der Zuordnung eines Kanalaufteilungscodes zu einem Kanal gemäß dem Verfahren nach den Ansprüche 1, 11, 12, 13, 14 oder 15 anwenden, wobei die Vorrichtung eine Funk-Basisstation (RBS), eine Funk-Basisstationssteuerung (RBC) oder eine Funknetzsteuerung (RNC) ist.

18. Vorrichtung nach Anspruch 17, wobei die Vorrichtung nach einem Breitband-CDMA- (WCDMA-) Standard arbeitet.

19. Codemultiplex-Vielfachzugriff- (CDMA-) System, mit Vorrichtungen nach Anspruch 17 und einer mobilen Nutzereinrichtung, wobei das System das Verfahren nach den Ansprüchen 1, 11, 12, 13, 14 oder 15 anwendet.

20. System nach Anspruch 19, wobei das System ein System ist, das gemäß einem Breitband-CDMA- (WCDMA-) Standard arbeitet.

## Revendications

1. Procédé pour réaliser une allocation de codes de découpage en canaux (C_{ch}) à des canaux dans un système d'accès multiples par répartition en code (CDMA) ayant les codes de découpage en canaux (C_{ch}) organisés dans un arbre de codage primaire et zéro arbre de codage secondaire ou plus, où chacun des arbres de codage a zéro arbre de codage alternatif ou plus, chaque arbre de codage ayant un ou plusieurs codes de découpage en canaux (C_{ch}) par facteur d'étalement (SF), où les codes de découpage en canaux (C_{ch}) sont selon leur position dans l'arbre de décodage désignés consécutivement par un indice de code avec une valeur la plus basse à une valeur la plus haute par facteur d'étalement (SF) au sein de chaque arbre de décodage, et où le système déploie toute combinaison de canaux qui peuvent opérer dans un premier type de mode compressé requérant une réallocation de canaux à un code de découpage en canaux avec un facteur d'étalement (SF) inférieur, et des canaux selon un second type de mode compressé, qui ne requièrent pas de réallocation, **caractérisé en ce que** le canal selon le premier type de mode compressé se voit allouer un code de découpage en canaux avec un indice de code le plus bas parmi un groupe de codes de découpage en canaux (C_{ch}) libres pour un certain facteur d'étalement (SF), et un canal selon le second type de mode compressé se voit allouer un code de découpage en canaux avec un indice de code le plus haut parmi le groupe de codes de découpage en canaux (C_{ch}) libres pour un certain facteur d'étalement (SF).

2. Procédé selon la revendication 1, dans lequel une demande d'allocation d'un code de découpage en canaux pour un canal contient le type de mode compressé à déployer.

3. Procédé selon la revendication 1, dans lequel le groupe de codes de découpage en canaux (C_{ch}) libres pour un certain facteur d'étalement (SF) comprend des codes de découpage en canaux (C_{ch}) provenant de l'arbre de codage primaire.

4. Procédé selon la revendication 3, dans lequel le groupe de codes de découpage en canaux (C_{ch}) libres pour un certain facteur d'étalement (SF) comprend également des codes de découpage en canaux (C_{ch}) provenant d'un ou plusieurs arbres de codage secondaire.

5. Procédé selon la revendication 3 ou 4, dans lequel le groupe de codes de découpage en canaux (C_{ch}) libres pour un certain facteur d'étalement (SF) comprend également des codes de découpage en canaux (C_{ch}) provenant d'un ou plusieurs arbres de codage alternatifs, chacun des arbres de codage alternatifs étant relatif audit arbre de codage primaire ou secondaire.

6. Procédé selon la revendication 5, dans lequel une sélection d'un code de découpage en canaux parmi le groupe de codes de découpage en canaux (C_{ch}) libres pour un certain facteur d'étalement (SF) provenant de l'arbre de codage primaire est prioritaire par rapport à un code de découpage en canaux provenant de chacun des arbres de codage alternatifs, où l'arbre de codage alternatif est relatif à l'arbre de codage primaire.

7. Procédé selon les revendications 5 ou 6, dans lequel une sélection d'un code de découpage en canaux parmi le groupe de codes de découpage en canaux (C_{ch}) libres pour un certain facteur d'étalement (SF) provenant de l'arbre de codage alternatif, où l'arbre de codage alternatif est relatif à l'arbre de codage primaire, est prioritaire par rapport à un code de découpage en canaux provenant de l'arbre de codage secondaire.

8. Procédé selon les revendications 5, 6 ou 7, dans lequel une sélection d'un code de découpage en canaux parmi le groupe de codes de découpage en canaux (C_{ch}) libres pour un certain facteur d'étalement (SF) provenant de l'arbre de codage secondaire, est prioritaire par rapport à un code de découpage en canaux provenant d'un arbre de codage alternatif, où l'arbre de codage alternatif est relatif à l'arbre de codage secondaire.

9. Procédé selon les revendications 3 à 8, dans lequel le groupe de codes de découpage en canaux (C_{ch}) libres n'inclut pas de codes de découpage en canaux (C_{ch}) qui sont réservés.

10. Procédé selon la revendication 1, dans lequel la réallocation d'un code de découpage en canaux est une occasion limitée en durée dans le temps.

11. Procédé selon l'une quelconque des revendications précédentes, comprenant les étapes consistant à :
- déterminer le type de mode compressé du canal qui doit se voir allouer un code de découpage en canaux ;
- sélectionner un code de découpage en canaux parmi le groupe de codes de découpage en canaux (C_{ch}) libres avec un indice de code le plus bas, de là démarrer à partir du côté gauche de l'arbre de codage primaire pour allouer un code de découpage en canaux pour un canal selon le premier type de mode compressé ;
- sélectionner un code de découpage en canaux parmi le groupe de codes de découpage en canaux (C_{ch}) libres avec un indice de code le plus haut, de là démarrer à partir du côté droit de l'arbre de codage primaire pour allouer un code de découpage en canaux pour un canal selon le second type de mode compressé.

12. Procédé selon les revendications 1 à 10, pour allouer un code de découpage en canaux à un canal selon un premier type de mode compressé comprenant les étapes consistant à :
- créer une liste de codes de découpage en canaux (C_{ch}) candidats dans l'arbre de codage primaire qui sont libres et non réservés ;
- exclure de la liste un code de découpage en canaux candidat ayant un code parent correspondant au niveau de l'arbre de codage alternatif associé qui n'est pas libre ;
- sélectionner et allouer un code de découpage en canaux candidat de la liste avec un indice de code le plus bas, de là à partir du côté gauche de l'arbre de codage, sur l'arbre de codage primaire, si plus d'un code de découpage en canaux candidat existe dans l'arbre de codage primaire ;
- réallouer un canal selon le second type de mode compressé de l'arbre de codage primaire à un arbre de codage alternatif s'il n'y a pas de code de découpage en canaux candidat sur la liste, et allouer le code de découpage en canaux libéré au canal selon le premier type de mode compressé ;
- allouer un code de découpage en canaux à partir d'un nouvel arbre de codage secondaire si un espace libre insuffisant est créé par la réallocation de canaux selon le second type de mode compressé.

13. Procédé selon les revendications 1 à 10, pour allouer un code de découpage en canaux à un canal selon le second type de mode compressé comprenant les étapes consistant à :
- créer une liste de codes de découpage en canaux (C_{ch}) candidats dans l'arbre de codage primaire ou secondaire qui sont libres et non réservés ;
- sélectionner et allouer un code de découpage en canaux à partir de la liste avec un indice de code le plus haut, de là à partir du côté droit de l'arbre de codage, sur l'arbre de codage primaire ou secondaire, si plus d'un candidat existe dans l'arbre de codage primaire ou secondaire ;
- créer une première liste alternative, si aucun code de découpage en canaux au niveau de l'arbre de codage primaire ou secondaire n'existe, avec des codes de découpage en canaux (C_{ch}) candidats au niveau d'un arbre de codage alternatif côté droit relatif à l'arbre de codage primaire ou secondaire, lesquels codes de découpage en canaux (C_{ch}) doivent être libres et non réservés et avec la restriction que le même code de découpage en canaux au niveau de l'arbre de codage primaire ou secondaire relatif soit utilisé par un canal selon le second type de mode compressé ;
- sélectionner et allouer le code de découpage en canaux candidat avec l'indice de code le plus haut dans ladite première liste alternative si plus d'un code de découpage en canaux candidats existe ;
- créer une seconde liste alternative avec des codes de découpage en canaux (C_{ch}) candidats au niveau d'un arbre de codage alternatif gauche, lequel code alternatif est relatif audit arbre de codage primaire, si aucun code de découpage en canaux candidat au niveau de l'arbre de codage alternatif droit n'existe, lesquels codes de découpage en canaux (C_{ch}) doivent être libres et non réservés et le même code de découpage en canaux au niveau de l'arbre de codage primaire doit être utilisé par un canal selon le second type de mode compressé ;
- sélectionner et allouer le code de découpage en canaux candidat avec l'indice de code le plus haut dans ladite seconde liste alternative si plus d'un code de découpage en canaux candidats existe ;
- allouer un code de découpage en canaux à partir d'un nouvel arbre de codage secondaire si aucun code de découpage en canaux candidat au niveau de l'arbre de codage alternatif gauche n'existe.

14. Procédé selon la revendication 11, 12 ou 13, dans lequel les étapes sont déployées sur, et relatives à, l'arbre de codage primaire ou l'arbre de codage secondaire.

15. Procédé selon l'une quelconque des revendications précédentes, dans lequel le premier type de mode compressé est un procédé de facteur d'étalement (SF) divisé par 2 (SF/2), et le second type de mode compressé est un procédé d'ordonnancement de niveau supérieur (HLS) ou de perforation.

16. Procédé selon l'une quelconque des revendications précédentes, dans lequel le système CDMA est un système WCDMA.

17. Dispositif de système d'accès multiples par répartition en code (CDMA), comprenant un équipement électronique, des unités de traitement, une circuiterie E/S et une mémoire, configuré pour sélectionner et allouer des codes de découpage en canaux (C_{ch}), créer et stocker des listes avec des codes de découpage en canaux (C_{ch}) libres et non réservés, réallouer des canaux, déterminer le type de mode compressé du canal demandant un code de découpage en canaux, et appliquer le signalement entre une demande d'allocation d'un code de découpage en canaux à un canal et la réalisation de l'allocation d'un code de découpage en canaux à un canal, selon le procédé des revendications 1, 11, 12, 13, 14 ou 15, dans lequel le dispositif est l'un parmi une station de base radio (RBS), une unité de commande de station de base radio (RBC) et une unité de commande de réseau radio (RNC).

18. Dispositif selon la revendication 17, dans lequel le dispositif opère selon une norme CDMA à large bande (WCDMA).

19. Système d'accès multiples par répartition en code (CDMA) comprenant des dispositifs selon la revendication 17 et un équipement utilisateur mobile, dans lequel le système déploie le procédé des revendications 1, 11, 12, 13, 14 ou 15.

20. Système selon la revendication 19, dans lequel le système est un système opérant selon une norme CDMA à large bande (WCDMA).
